# DEMANDE DE BREVET EUROPEEN

(11) **EP 4 458 506 A1**
(43) Date de publication de la demande: **06.11.2024**
(21) Numéro de dépôt: 24173475.5
(22) Date de dépôt: 30.04.2024
(51) Int. Cl.: B23K 26/38, A61F 2/86, B23B 31/10, B23B 31/14, B23K 26/70, B23K 37/04

(54) **DISPOSITIF DE SERRAGE ROTATIF ; PROCÉDÉ DE MICRO-USINAGE PAR LASER D'UNE FIBRE DE DIAMÈTRE SUBMILLIMÉTRIQUE**

(30) Priorité: 02.05.2023 CH 4672023
(71) Demandeur: Posalux S.A., 2504 Bienne (CH)
(72) Inventeur: ROETHLISBERGER, Alex Eric, 2732 Loveresse (CH); FAORO, Alexandre, 2520 La Neuveville (CH); HEINZEL, Udo, 3286 Muntelier (CH)
(74) Mandataire: P&TS SA (AG, Ltd.)

(57) **Abrégé**

La présente invention porte sur un dispositif de serrage rotatif (1) adapté au micro-usinage laser de fils ou de fibres comprenant un dispositif de maintien de fibre (10) fixé à l'extrémité et à distance d'un support rotatif, comprenant une ouverture centrale (12) traversante, permettant d'y insérer une fibre à usiner, un élément de posage solidaire du dispositif de maintien de fibre (10) et un ensemble de serrage (20) mobile en translation selon un axe orthogonal à l'axe de rotation (D), comprenant une masse et un élément de pinçage disposés de part et d'autre de l'axe de rotation (D).

## Description

### Domaine technique

La présente invention concerne un dispositif de serrage rotatif, en particulier un dispositif adapté au serrage de fibres pour leur usinage laser.

### Etat de la technique

Le micro-usinage de pièces telles que des fibres au moyen d'un laser, plus particulièrement au moyen d'un femto laser ou pico laser, ou tout autre laser à haute fréquence, nécessite une grande précision dans le positionnement de telles pièces. Leur diamètre, ou leur largeur est typiquement de l'ordre de quelques dizaines de micromètres et leur longueur est inférieure à 40 mm, voir inférieure à 30 mm. La qualité d'usinage dépend fortement des éventuelles déformations de la pièce, en particulier lorsque l'usinage concerne l'extrémité de celle-ci. Dans ces conditions, les courbures de la pièce peuvent en décaler l'extrémité par rapport au point théorique où est focalisé le faisceau laser et conduire à un manque de reproductibilité et/ou à des défauts d'usinage.

En outre, les fibres peuvent nécessiter un usinage laser à chacune de leur extrémité. Il convient alors d'en limiter au maximum les manipulations, telles que les opérations de reprise pour des questions de productivité et de précision.

Le document US2015290743 décrit un moyen de maintenir des fibres de diamètre submillimétrique pour les découper en tronçons au moyen d'un laser. Un tel dispositif ne permet cependant pas d'en usiner précisément leur extrémité.

Il y a donc matière à développer de nouvelles solutions permettant le micro-usinage de fibres de diamètre submillimétrique par laser.

### Bref résumé de l'invention

Un but de la présente invention est de proposer un dispositif de serrage permettant un micro-usinage reproductible de fibres de diamètre submillimétrique. En particulier, un objectif est de proposer un dispositif de serrage permettant d'usiner l'extrémité de telles fibres.

Un autre but de l'invention est de proposer un dispositif de serrage de fibres de diamètre submillimétrique permettant leur micro-usinage à plusieurs endroits tout en limitant leur manutention. En l'occurrence, un tel dispositif vise à l'usinage des deux extrémités de telles fibres.

Un autre but de la présente invention est de proposer une méthode de micro-usinage par laser de fibres de diamètre submillimétrique permettant une reproductibilité et/ou une productivité accrue par rapport aux méthode connues.

Selon l'invention, ces buts sont atteints notamment au moyen du dispositif et de la méthode objet des revendications indépendantes et détaillés dans les revendications qui en dépendent.

Cette solution présente notamment l'avantage par rapport à l'art antérieur de d'usiner des fibres de diamètre submillimétrique avec une précision et/ou un rendement accru.

### Brève description des figures

Des exemples de mise en oeuvre de l'invention sont indiqués dans la description illustrée par les figures suivantes :
- Figures 1a, 1b : Vue schématique en perspective d'un dispositif selon la présente description ;
- Figure 2a : Représentation schématique de face d'un dispositif de maintien de fibres selon un mode de réalisation de la présente description ;
- Figure 2b : Représentation schématique de face d'un dispositif de maintien de fibres selon un mode de réalisation de la présente description
- Figure 3 : Représentation schématique de face d'un dispositif de maintien de fibres selon un autre mode de réalisation de la présente description ;
- Figure 4 : Détails d'un dispositif de maintien de fibres selon un mode de réalisation de la présente description ;

### Exemple(s) de mode de réalisation de l'invention

Le dispositif 1 selon la présente description est adapté au positionnement et au maintien de fibres 30, dont le diamètre est submillimétrique, pendant leur usinage laser. Les fibres peuvent être constituées de tout matériau, incluant les plastiques, les polymères, les métaux et alliages de métaux, y compris les métaux précieux. Selon leur nature, elles peuvent être utilisées dans des applications de connectique, plus particulièrement de micro-connectique. Elles peuvent désigner par exemple des sondes filaires, connues généralement sous les termes anglais de « wire probe ». Leur application s'étend à tout autre domaine nécessitant de telles fibres micro-usinées. Leur diamètre est de l'ordre de quelques dizaines à quelques centaines de micromètres. Elles peuvent être d'un diamètre inférieur à 100 micromètres, soit compris entre 10 et 90, 20 et 80 ou de 30 à 60 micromètres. Des fibres d'un diamètre de l'ordre de 150, 200, ou 300 micromètres peuvent également être usinées selon les termes de la présente description. Leur longueur ne dépasse de préférence pas 5 centimètres, voire 3 centimètres.

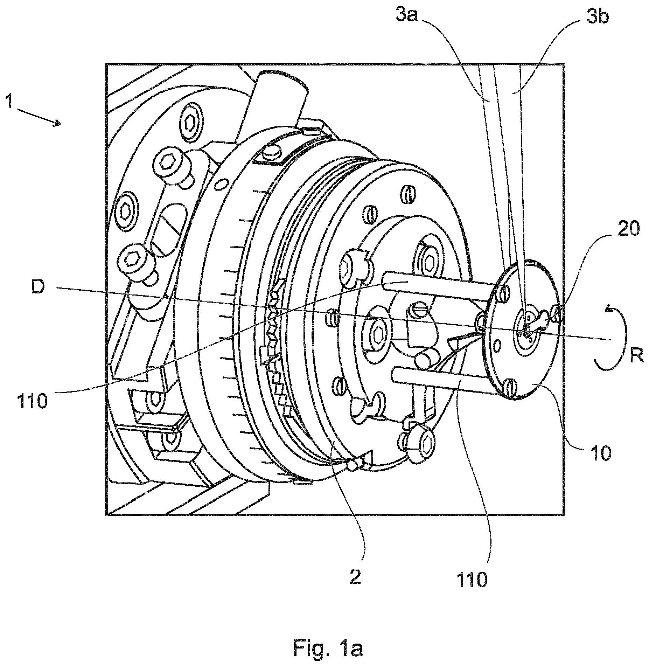

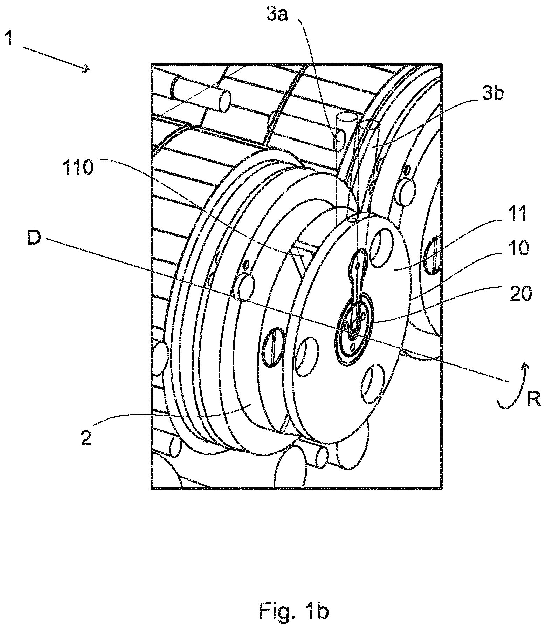

Les fibres 30 sont généralement issues d'un long fil enroulé sous forme de bobine et découpée à la longueur requise. Pour ce faire, un dévidoir approprié permet de tirer une extrémité du fil initial et de la découper à la longueur adéquate. Le découpage peut se faire au moyen d'un laser, plus particulièrement d'un femto-laser ou d'un pico-laser ou tout moyen équivalent. Le tronçon de fil qui en résulte constitue la fibre selon la présente description et fait ensuite l'objet d'un micro-usinage, typiquement à l'une de ses extrémités, voire au niveau de ses deux extrémités. L'usinage s'effectue au moyen d'un ou plusieurs faisceaux laser 3a, 3b (figure 1) produits par une ou plusieurs sources laser fixes (non représentées). Selon un mode de réalisation privilégié, l'usinage est effectué au moyen d'un scanner laser 3D, permettant de déplacer et/ou de positionner le faisceau laser avec précision. Le scanner 3D peut être un scanner 5 axes. Il peut ainsi être incliné d'un angle de +/- 10° par rapport à la perpendiculaire à l'axe d'usinage D. Du fait de son stockage sous forme de bobine, le fil, peut adopter une forme courbe, et la fibre obtenue 30 peut ne pas être parfaitement rectiligne, ce qui peut entacher la précision et/ou la reproductibilité de l'usinage.

Le dispositif de serrage 1 ici décrit est particulièrement adapté pour maintenir le tronçon de fil issu de la bobine, ainsi que la fibre 30 qui en résulte après découpage. En particulier l'une ou les deux des extrémités de la fibre peuvent être placées à une position préétablie et reproductible. Pour ce faire le dispositif de serrage 1 est rotatif, ce qui permet un usinage parfaitement concentrique, de type tournage. Les vitesses de rotation sont adaptées en conséquence. Elles sont par exemple de l'ordre de 1000 à 5000 tours par minutes, voire plus de 6000 tours par minutes. Cela n'exclut pas des vitesses de rotation supérieures, pouvant être de l'ordre de 10 000 à 50 000 tours par minutes.

Le dispositif de serrage 1 comporte à cet effet un support rotatif 2 entrainé par un moteur adéquat. Le support rotatif porte à son extrémité un dispositif de maintien de fibre 10, lequel est adapté pour maintenir une extrémité du fil issue de la bobine, autant que la fibre 30 lors de son micro-usinage. Le dispositif de maintien de fibre 10 est fixé à distance du support rotatif de sorte à laisser un espace entre lui et le support rotatif 2. Ainsi, le tronçon de fil qui se trouve entre le support rotatif 2 et le dispositif de maintien de fibre 10 reste accessible. Le fil peut être par exemple coupé au moyen d'un faisceau laser 3a. L'extrémité de la fibre 30 qui résulte de ce coupage peut en outre être usinée au moyen de ce faisceau laser.

Le support rotatif 2, ainsi que le dispositif de maintien de fibre 10 tournent selon un axe de rotation D, correspondant en somme à l'axe longitudinal du support rotatif. La rotation R selon cet axe D peut être effectuée dans le sens horaire ou bien dans le sens anti-horaire. Selon un mode de réalisation avantageux, le support rotatif 2 offre la possibilité de sélectionner le sens de rotation. Le dispositif de maintien de fibre 10 peut être solidarisé au support rotatif 2 au moyen d'un ou plusieurs axe ou pilier **110,** disposés à distance de l'axe de rotation **D.**

Selon un mode de réalisation illustré dans les figures 1a et 1b, le dispositif de maintien de fibre **10** comporte une surface de fixation **11** adaptée à recevoir le ou les piliers **110,** par exemple au moyen de trous, de clips, ou de tout autre moyen de fixation et/ou de verrouillage adéquat. Les piliers permettent de solidariser le dispositif de maintien de fibre **10** à la base du support rotatif **2** tout en laissant l'accès latéral à un faisceau laser **3a** sur une très large amplitude angulaire. La surface angulaire accessible par le faisceau laser **3a** est par Exemple supérieure à 355° ou 350°. En d'autres termes, les piliers **110** sont conçus de sorte à n'occulter le faisceau laser que sur infime portion de la circonférence du fil ou de la fibre **30.** Les piliers **110** sont ainsi plus avantageusement sous la forme d'une lame fine, comme illustré dans la figure 1b que sous une forme cylindrique comme illustré à la figure 1a. Le nombre de piliers **110** est également limité au minimum. Il peut être par exemple de 2 ou 3. Selon les besoins, un seul pilier peut être envisagé.

Selon un mode de réalisation plus détaillé à la figure 1b, la surface de fixation **11** ainsi que le ou les piliers **110** et la base du support rotatif 2 sont réalisés d'une seule pièce. Une telle pièce peut être réalisée par tout procédé usuel. Selon un mode de réalisation particulier, la pièce unique est produite au moyen d'un procédé de fabrication additive tel que l'impression 3D. Elle peut ensuite recevoir des traitements adaptés tels qu'un ou plusieurs recuits, une ou plusieurs opérations d'usinage, d'équilibrage ou de rectification.

La surface de fixation **11** est avantageusement une surface périphérique du dispositif de maintien de fibre **10** laissant libre l'espace central. La surface de fixation **11** forme globalement un plan perpendiculaire, soit transversal, à l'axe de rotation D. Selon une disposition particulière, l'orientation de la surface de fixation **11** par rapport à l'axe de rotation D peut être modulée ou ajustée, de sorte par exemple à compenser un éventuel biais de la fibre en usinage. Les deux extrémités de la fibre **30** peuvent ainsi être orientées de sorte à limiter leur excentricité à moins d'une certaine valeur critique. Selon les besoins, l'excentricité tolérée peut être de 4µm par rapport au diamètre de la fibre **30** ou inférieure. Alternativement, l'excentricité tolérée peut être définie comme une fraction du diamètre, telle que 1%, 2% ou moins de 5% ou 10% du diamètre de la fibre **30.** La surface de fixation **11** peut être inclinée jusqu'à un angle de l'ordre de 5° ou 10° par rapport à la perpendiculaire à l'axe de rotation D. Le dispositif de maintien de fibre **10** peut globalement prendre la forme d'un disque dont la partie la plus externe forme la surface de fixation **11.** La surface de fixation **11** peut représenter de l'ordre de 10% à 30% ou 50% ou 60% ou 80% de la surface totale du dispositif de maintien de fibre **10.** Cela n'exclut cependant pas d'autres arrangements permettant la fixation du dispositif de maintien de fibre **10** sur le support rotatif **2** ni d'autres géométries du dispositif de maintien de fibre **10,** qui peut être de forme carrée. Pour des raisons d'équilibrage lors de sa rotation, le dispositif de maintien de fibre **10** est de préférence symétrique selon l'axe de rotation **D.**

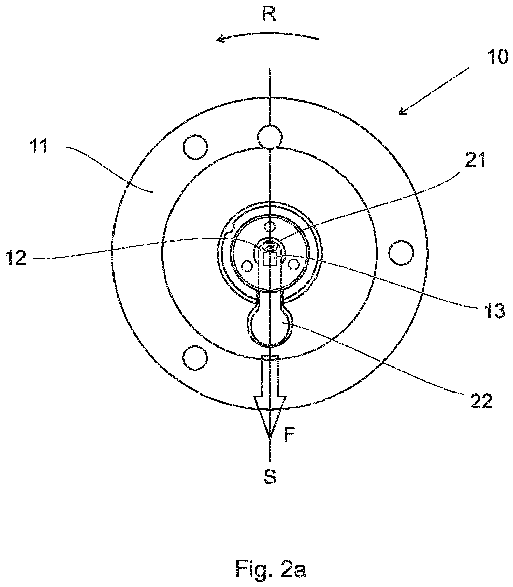

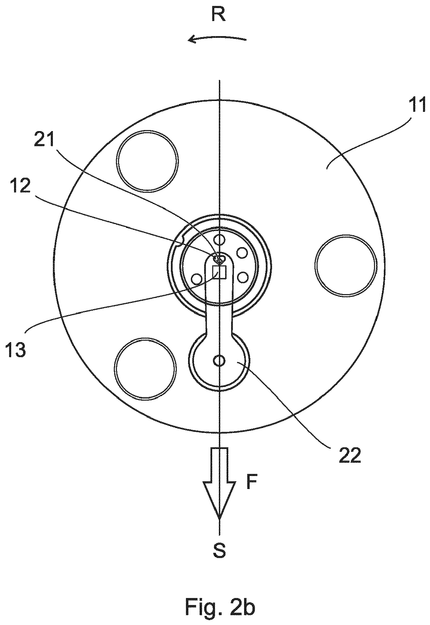

La partie centrale du dispositif de maintien de fibre **10** est dédiée au maintien d'une fibre **30.** Elle comporte à cet effet une ouverture centrale traversante **12** (figure 2a, 2b) permettant de faire passer le fil issue d'une bobine, dont résulte la fibre **30.** Le diamètre minimal de cette ouverture centrale **12** est donc au moins égal au diamètre d'un fil, c'est-à-dire supérieur à quelques dizaines ou centaines de micromètres. En pratique, l'ouverture centrale **12** peut être beaucoup plus large, pour autant qu'un fil puisse être maintenu en position centrale, comme décrit plus précisément plus loin. Quel que soit l'arrangement choisi, le dispositif de maintien de fibre 10 permet de maintenir l'axe longitudinal de la fibre **30** confondu avec l'axe de rotation **D** du support rotatif **2.**

Pour ce faire, il comporte au moins un élément de posage **13** servant d'appui et/ou de mise en référence du fil ou de la fibre résultante **30.**L'élément ou les éléments de posage **13** permettent d'accueillir la surface longitudinal d'une fibre **30,** notamment sur une portion substantielle de sa longueur. L'élément ou les éléments de posage **13** définissent une surface de posage **130** transversale au dispositif de maintien de fibre **10.** En d'autres termes, la surface de posage **130** peut être considérée comme étant orientée selon l'axe de rotation **D.** La surface de posage **130** peut par exemple correspondre à une surface dans l'épaisseur du dispositif de maintien de fibre **10** correspondant exactement à l'épaisseur du dispositif de maintien de fibre **10** ou inférieure ou supérieure à l'épaisseur du dispositif de maintien de fibre **10.** L'élément ou les éléments de posage **13** sont solidaires du dispositif de maintien de fibre **10,** en particulier fixes par rapport à lui. La surface de posage **130** est disposée de sorte à maintenir l'axe longitudinal de la fibre **30** confondu à l'axe de rotation **D.** En fonction du diamètre de la fibre **30** considérée, elle peut être excentrée de quelques dizaines de micromètres, soit de l'ordre de 10, 20, 30, 50 ou 80 micromètres, ou de l'ordre de 100 à 150 micromètres par rapport à l'axe de rotation **D.**

La surface de posage **130** est de préférence rectiligne de sorte à maintenir la fibre **30** la plus rectiligne possible lorsqu'elle est à son contact. Alternativement, la surface de contact **130** peut représenter plusieurs surfaces alignées, disposées selon l'axe longitudinal de la fibre **30,** soit dans l'épaisseur du dispositif de maintien de fibre **10,** pour autant que ces surfaces de posage permettent un positionnement rectiligne de la fibre **30.**

Le dispositif de maintien de fibre **10** est lui-même d'une épaisseur adaptée à la longueur des fibres **30** à usiner. Il est typiquement d'épaisseur comprise entre 1 mm et 2 mm, représentant environ 80% de la longueur des fibres **30.** Ainsi, le micro-usinage peut s'effectuer à une distance limitée, d'au moins 0,1 ou 0,2, 0,3 ou 0,4 mm. Le micro-usinage peut ainsi s'effectuer à une distance du dispositif de maintien de fibre **10** comprise entre 0,1 et 0,4 mm, ce qui limite les débattements possibles de la fibre **30.**

Le dispositif de maintien de fibre **10** comporte un ensemble de serrage **20,** plus détaillé dans les figures 2 à 4, permettant de maintenir la fibre **30** en étroit contact avec la surface de posage **130.** L'ensemble de serrage **20** est mobile en translation selon un axe **S** orthogonal à l'axe de rotation **D.** Le débattement de l'ensemble de serrage **20** selon cet axe de translation est variable, mais doit permettre de libérer l'ouverture centrale **12** pour y laisser passer une fibre **30** et venir à son contact pour la maintenir sur la surface de posage **13.** Le débattement minimal n'est alors pas supérieur à l'épaisseur de la fibre **30.** Le débattement maximal peut être de l'ordre de 2 ou 3 fois l'épaisseur de la fibre **30,** bien que cette limite puisse être aisément étendue. En d'autre termes, le débattement minimal de l'ensemble de serrage **20** est de l'ordre de 10, 20 ou 40 micromètres, voire nul dans le cas où l'ensemble de serrage **20** est adapté à venir en contact direct avec la surface de posage **13** en l'absence de fibre **30.** Le débattement maximal peut être limité à environ 100 ou 200 ou 300 micromètres, laissant ainsi un espace suffisant pour y incérer une fibre **30** dans l'ouverture centrale **12.**

L'ensemble de serrage **20** comprend une masse **22** permettant d'initier sa translation selon l'axe **S,** sous l'influence de la force centrifuge **F** lorsque le support rotatif **2** est mis en rotation. L'ensemble de serrage **20** comprend en outre un élément de pinçage **21,** mécaniquement relié à la masse **22** et disposé à l'opposé de l'axe de rotation **D** par rapport à la masse **22.** La masse **22** et l'élément de pinçage **21** sont alors disposés de part et d'autre de l'axe de rotation **D,** et par conséquent de la fibre **30** lorsqu'elle est présente. Une rotation **R** du dispositif de serrage rotatif **1** selon son axe **D** induit la translation de la masse **22** selon l'axe **S** et par conséquent le rapprochement de l'élément de pinçage **21** vers l'élément de posage **13,** conduisant ainsi au serrage de la fibre **30.**

Selon un mode de réalisation, la masse **22** est calibrée de sorte que la force exercée sur la fibre **30,** à la vitesse de rotation préconisée, soit adéquate pour son maintien sans dépasser un certain seuil qui détériorerait la fibre **30,** par écrasement par exemple. Alternativement ou en plus, la course de la masse **22** peut être limitée, par exemple par une butée (non représentée), de sorte à éviter toute détérioration de la fibre par une trop forte pression sur la surface de posage **13.** La course de la masse **22** peut être limitée par exemple de sorte que le débattement minimal de l'ensemble de serrage **20** ne soit pas inférieur au diamètre de la fibre **30.**

La surface de posage **130** peut être plane. Avantageusement, la surface de posage **130** peut comporter une rainure orientée selon l'axe de rotation **D** de sorte à caller la fibre **30.** Dans ces conditions, une telle rainure peut être calibrée pour correspondre au diamètre de la fibre **30.** Elle doit être parfaitement homogène pour maintenir la fibre la plus rectiligne possible et ne pas la détériorer. Une telle rainure peut avoir une section circulaire ou semi-circulaire, correspondant à la forme cylindrique du fil et/ou de la fibre **30** correspondante. Alternativement, une telle rainure peut avoir une section carrée, ou en forme de « V » ou toute autre forme adaptée.

Etant donné les dimensions considérées et la précision requise, l'usinage d'une telle rainure directement dans la surface de posage **130** peut se révéler délicat. Selon un mode de réalisation, l'élément de posage **13** peut comporter deux portions **13a, 13b** (Figure) pouvant être usinées séparément de sorte à produire ensemble une rainure suffisamment homogène pour les besoins de la présente application. Les deux portions **13a, 13b** comportent chacune une surface mitoyenne, idéalement plane, permettant de juxtaposer les deux portions **13a, 13b.** Elles comportent en outre chacune une surface **130a, 130b,** correspondant à une partie de la surface de posage **130,** typiquement orthogonale à leur surface mitoyenne. L'arête formée par leur surface mitoyenne et leur surface de posage **130a, 130b** respective est biseautée. Les chanfreins ainsi produits forment chacun une surface plane, plus facile à usiner avec précision qu'une rainure. Les deux portions **13a, 13b** sont juxtaposées par leur surface mitoyenne, de sorte que leur chanfrein soient en vis-à-vis, formant ainsi une rainure en forme de « V », rectiligne et homogène.

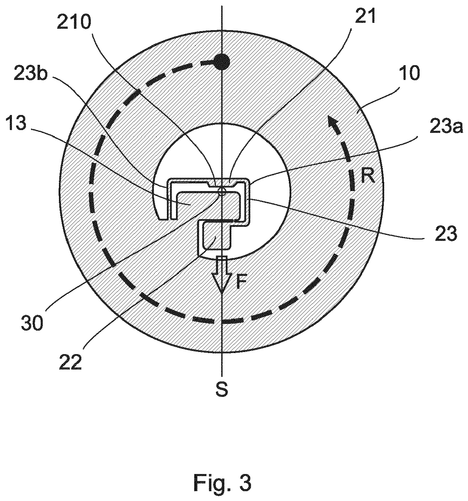

L'élément de pinçage **21** peut prendre l'aspect d'une surface d'appui, plane **210** (figure 3), venant au contact de la fibre sous l'influence de la masse **22.** Une telle surface de contact **210** peut être significativement plus large que le diamètre de la fibre, soit plus de 40, 60, 100 ou 500 micromètres voir de l'ordre de 1 millimètre ou plus. La surface de contact **210** s'étend de préférence sur une portion substantielle de l'épaisseur du dispositif de maintien de fibre **10,** voire au-delà. La surface de contact **210** peut s'étendre par exemple sur une longueur comprise entre 1,5 et 3 mm, ou entre 60% et 120% de l'épaisseur du dispositif de maintien de fibre **10.** Elle peut s'étendre sur une longueur égale ou différente de celle de la surface de posage **130.** De préférence, les surfaces de contact **210** et de posage **130** sont de même dimension suivant l'axe **D.**

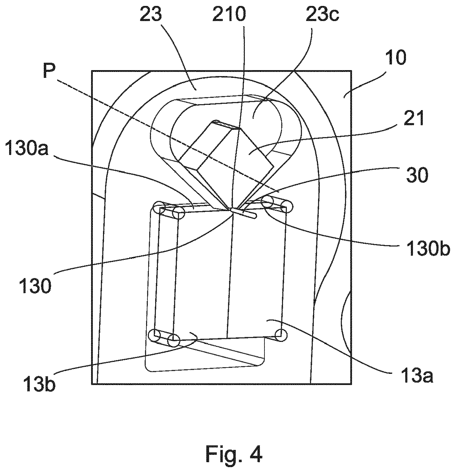

Alternativement, l'élément de pinçage **21** comporte une surface de contact **210** dont la largeur correspond approximativement au diamètre de la fibre **30,** ou ne dépasse pas son diamètre de plus de 10% ou 20% (figure 4). Typiquement, la largeur de la surface de contact **210** est alors de l'ordre des valeurs indiquées plus haut pour le diamètre de la fibre **30.**

Selon un mode de réalisation possible, l'élément de pinçage **21** est solidaire de l'ensemble de serrage **20** et fixe par rapport à lui (figure 3). Il peut être mécaniquement relié à la masse **22** par un lien **23,** qui le rende solidaire des mouvements de la masse **22** dans les deux sens de translation suivant l'axe **S.** Alternativement, l'élément de pinçage **21** peut être partiellement indépendant de la masse **22** (figure 4). Selon une telle disposition, la masse 22 est associée à l'élément de liaison **23,** formant un corps dans lequel est aménagé un évidement **23c** autour de l'élément de pinçage **21.** L'élément de pinçage **21** reste lié au dispositif de maintien de fibre **10** de sorte à pouvoir se déplacer librement en translation selon l'axe **S,** autant que ne le permette l'évidement **23c.** La mise en rotation du dispositif de serrage **1,** en initiant la translation de la masse **22** induit le mouvement de l'élément de pinçage **21** via son corps **23,** effectuant ainsi le serrage de la fibre **30.** La masse **22** et l'élément de pinçage **21** sont alors désolidarisés et peuvent être manipulé indépendamment l'un de l'autre le cas échéant.

Selon un mode de réalisation visible à la figure 3, la liaison **23** peut comporter une première portion **23a** reliant la masse **22** à l'élément de pinçage **21** et une seconde portion **23b** établissant une liaison flexible avec le dispositif de maintien de fibre **10.** Une telle liaison flexible autorise la translation de la masse **22** selon l'axe **S** sous l'influence d'une force centrifuge **F,** et par conséquent le serrage adéquat de la fibre **30.**

Selon un autre mode de réalisation, plus détaillé à la figure 4, la masse **22** et l'élément de pinçage **21** sont solidarisés au dispositif de maintien de fibre **10** au moyen d'une liaison non flexible adapté à la translation de ces deux élément le long de l'axe **S,** qu'ils soient dépendants ou indépendants l'un de l'autre. Par exemple, la masse **22** et/ou l'élément de pinçage **21** peuvent comporter un ou plusieurs ergots adaptés à glisser dans une fente du dispositif de maintien de fibre **10.** Alternativement, la masse **22** et/ou l'élément de pinçage **21** peuvent être insérés entre deux disques formant les surface externes du dispositif de maintien de fibre **10** de sorte à pouvoir y glisser selon l'axe **S.** Des rainures ou des glissières peuvent être aménagées à cet effet. D'autres arrangements équivalents peuvent être envisagés.

Selon un mode de réalisation, l'élément de pinçage **21** et la masse **22** sont indissociables l'un de l'autre, comme dans le cas de la figure 3. Alternativement, l'élément de pinçage **21** et la masse **22** sont indépendants l'un de l'autre, comme dans le cas de la figure 4. Dans ce dernier cas, l'élément de pinçage **21** et/ou la masse **22** peuvent faire l'objet d'adaptations ou de modulations indépendantes. Par exemple, les dimensions de l'élément de pinçage **21** et ou de la masse **22** peuvent être adaptées, notamment en fonction des caractéristiques des fibres usinées. L'élément de pinçage **21** peut être remplacé par un autre élément de pinçage tout en conservant la masse **22.** Alternativement ou en outre, une masse **22** plus importante ou pus faible peut être disposée en fonction des caractéristiques des fibres à usiner.

Selon un mode de réalisation particulier, l'élément de pinçage **21** peut comporter plusieurs surfaces de contact **210** chacune adaptée à des applications particulières. A cet effet, l'élément de pinçage **21** peut se présenter sous la forme d'un parallélépipède carré dont les 4 arêtes sont chanfreinées de manière différente, offrant ainsi des surfaces de contact **210** de dimensions variées. L'élément de pinçage **21** peut être adapté pour tourner selon un axe **P** (figure 4) parallèle à l'axe **D,** de sorte à disposer l'une ou l'autre de ses surfaces de contact **210** devant la surface de posage **130.** Un tel réglage peut être manuel ou bien automatisé. Une forme triangulaire, ou d'autres formes polygonales de l'élément de pinçage **21** peuvent être envisagées en fonction du nombre d'alternatives nécessaires.

D'autres réglages et/ou ajustements peuvent être effectués sur le dispositif de la présente description. Notamment la surface de posage **130** peut faire l'objet d'ajustements. Les deux portions **13a, 13b** de l'élément de posage **13** peuvent par exemple être remplacées par des portions dont les chanfreins sont différents, de sorte à adapter la rainure de la surface de posage **130** aux dimensions des fibres à usiner.

La masse **22** étant excentrée, elle peut provoquer un déséquilibre ou produire des vibrations lors de rotations à grande vitesse. Les éléments disposés en vis-à-vis, tels que l'élément de pinçage **21,** peuvent être dimensionnés de sorte à contrebalancer l'effet de la masse **22,** au moins en partie. Alternativement ou en plus, un contrepoids peut être prévu sur le dispositif de maintien de fibre **10.**

Le ou les pilier **110,** peuvent en outre faire l'objet de réglages, notamment pour adapter ou ajuster l'espace entre le dispositif de maintien de fibre **10** et le reste du dispositif de serrage **1.** Ils peuvent être par exemple de type télescopique avec un système de verrouillage.

Selon un mode de réalisation, le dispositif de maintien de fibre **10** peut comporter un dispositif de rappel (non représenté), permettant de maintenir l'ensemble de serrage **20** dans sa position de débattement maximal. L'ouverture centrale **12** est ainsi toujours libre pour le passage d'une fibre **30.** Un tel dispositif de rappel peut par exemple prendre la forme d'un ressort ou de tout autre élément élastique adapté. L'élément de rappel est alors dimensionné pour ne pas faire entrave au serrage dès lors que le dispositif de maintien de fibre **10** est mis en rotation.

Les différents modes de réalisations décrits ci-dessus ne sont pas destinés à être mutuellement exclusifs. Les différents éléments peuvent être combinés entre eux, dès lors qu'ils répondent aux besoins de la présente invention. En l'occurrence, les portions **13a, 13b** de l'élément de posage s'appliquent aussi bien aux figures 4 et 3.

La présente description concerne en outre une méthode ou un procédé d'usinage de fibres **30** telles que celles décrites ici. Le procédé comporte une étape de disposer une fibre **30** dans le dispositif de maintien de fibre **10.** La fibre est disposée de sorte à laisser dépasser au moins l'une de ses extrémité, de préférence les deux, de la surface ou des surfaces externes du dispositif de maintien de fibre **10.** Il comporte en outre une étape de mettre en rotation le dispositif de maintien de fibre **10** autour de son axe de rotation **D,** de sorte que la force centrifuge **F** ainsi créée déplace l'ensemble de serrage en translation selon un axe **S** orthogonal à l'axe de rotation **D.** La vitesse de rotation est adaptée aux besoins de l'application. Outre le serrage résultant de la force centrifuge, la fibre adopte une forme plus rectiligne du fait de la rotation **R,** ce qui contribue à la précision de l'usinage.

Le procédé comporte une étape de micro-usinage d'au moins une partie la fibre **30,** par exemple, l'une de ses extrémités, voire de ses deux extrémités. Le micro-usinage est effectué au moyen d'un laser haute fréquence tel qu'un femtolaser ou un picolaser dont la source est fixe et disposée à proximité du dispositif de maintien de fibre **10.** La source laser peut être par exemple disposée de sorte à générer un faisceau laser orthogonal à l'axe de rotation D, ou essentiellement orthogonal à cet axe, c'est-à-dire avec un angle de l'ordre de 90° plus ou moins 1%, 5%, 10% ou plus ou moins 20%. L'usinage peut s'effectuer simultanément au niveau des deux extrémités de la fibre **30** au moyen de deux sources laser indépendante générant des faisceaux laser parallèles chacun focalisé sur une des extrémités de la fibre **30.** Alternativement, des scanners 3D sont utilisés, dont la surface de travail est supérieure à la longueur des fibres à usiner **30.**

Le procédé comporte une étape de desserrer la fibre usinée, en ralentissant la rotation **R** en deçà d'un seuil prédéterminé ou en arrêtant la rotation, de sorte à libérer la fibre **30.**

Le procédé peut comporter une ou plusieurs autres étapes telles que dévider au préalable le fil stocké sous la forme d'une bobine et inclure son extrémité dans le dispositif de maintien de fibre **10** ici décrit, sectionner le fil de sorte à isoler une fibre à usiner 30, en particulier au moyen du faisceau laser 3a ici décrit, régler, ajuster ou remplacer le cas échéant un ou plusieurs des éléments de pinçage **21,** de l'élément de posage **13** et des piliers **110,** orienter le cas échéant la surface de fixation **11** par rapport à l'axe de rotation D.

### Numéros de référence employés sur les figures

- 1: Dispositif de serrage rotatif
- 10: Dispositif de maintien de fibre
- 110: Pilier
- 11: Surface de fixation
- 12: Ouverture centrale
- 13: Eléments de posage
- 13a, 13b: Portions d'élément de posage
- 130, 130a, 130b: Surface de posage
- 2: Support rotatif
- 20: Ensemble de serrage
- 21: Elément de pinçage
- 210: Surface d'appui
- 22: Masse
- 23. 23a, 23b, 23c: Elément de liaison
- 3a, 3b: Faisceaux laser
- 30: Fibres
- D: Axe de rotation
- R: Rotation
- S: Axe de translation

## Revendications

1. Dispositif de serrage rotatif (1) adapté au serrage d'un fil et/ou d'une fibre (30) pour son micro-usinage laser, comprenant un support rotatif (2) tournant selon un axe de rotation (D), un dispositif de maintien de fibre (10) fixé à l'extrémité et à distance du support rotatif, le dispositif de maintien de fibre (10) comprenant :
- une surface de fixation (11) transversale à l'axe de rotation (D), permettant de le maintenir solidaire du support rotatif (2),
- une ouverture centrale (12) traversante orientée selon l'axe de rotation (D), permettant d'y insérer lesdits fil et/ou fibre à usiner,
- un élément de posage (13) solidaire du dispositif de maintien de fibre (10), orienté selon l'axe de rotation (D) et traversant, adapté au posage d'une fibre à usiner, et
- un ensemble de serrage (22) mobile en translation selon un axe (S) orthogonal à l'axe de rotation (D) comprenant un élément de pinçage (21) disposés de part et d'autre de l'axe de rotation (D) de sorte qu'une rotation (R) du dispositif de serrage rotatif (1) selon son axe (D) induise sur la masse une force (F) centrifuge propre à rapprocher l'élément de pinçage (21) vers l'élément de posage (13).

2. Dispositif selon la revendication 1, dans lequel la surface de fixation (11) est solidarisée au support rotatif (2) au moyen d'un ou plusieurs piliers (110).

3. Dispositif selon l'une de revendications 1 et 2, dans lequel la surface de fixation (11) et le support rotatif (2) forment une pièce unique.

4. Dispositif selon l'une des revendications 1 à 3, dans lequel l'élément de posage (13) définit une surface de posage (130) adaptée comportant une rainure en forme de « V » orientée selon l'axe (D) ou parallèle à l'axe (D) et adaptée à recevoir la fibre à usiner (30).

5. Dispositif selon l'une des revendications 1 à 4, dans lequel l'élément de posage (13) comporte deux portions (13a, 13b) juxtaposées, l'un des angles au moins de chacune des deux portions (13a, 13b) étant biseauté et disposé en vis-à-vis l'un de l'autre.

6. Dispositif selon l'une des revendications 1 à 5, dans lequel l'élément de pinçage (21) comporte une ou plusieurs surfaces de contact (210) disposée en vis-à-vis de la surface de posage (130).

7. Dispositif selon l'une des revendications 1 à 6, la masse (22) étant associée ou combinée à l'élément de pinçage (21) au moyen d'une liaison (23).

8. Dispositif selon l'une des revendications 1 à 7, l'élément de pinçage (21) et la masse (22) étant indépendant l'un de l'autre.

9. Procédé de micro-usinage par laser d'une fibre (30) de diamètre submillimétrique, comprenant les étapes de :
- Disposer une fibre 30 dans l'ouverture centrale (12) du dispositif de maintien de fibre décrit dans la revendication 1 ;
- Mettre en rotation le dispositif de maintien de fibre 10 de sorte à exercer un serrage de la fibre le long de la surface de posage, résultant d'une force centrifuge (F) ;
- Opérer l'usinage d'au moins une portion de la fibre (30) au moyen d'un faisceau laser orienté à 90° par rapport à l'axe de rotation (D) plus ou moins 10° ; et
- Desserrer la fibre usinée en ralentissant ou arrêtant la rotation.

10. Procédé selon la revendication 9, l'étape d'usinage comprenant l'usinage simultané de plusieurs parties de la fibre (30) par Un scanner 3D dont la surface de travail est supérieure à la longueur de la fibre.
